# EUROPÄISCHE PATENTSCHRIFT

(11) **EP 4 614 478 B1**
(45) Veröffentlichungstag und Bekanntmachung des Hinweises auf die Patenterteilung: **18.11.2026**
(21) Anmeldenummer: 25157312.7
(22) Anmeldetag: 12.02.2025
(51) Int. Cl.: G08G 1/04, B60C 11/24, G06N 20/00, G06V 20/13, G06V 20/54

(54) **VERFAHREN ZUM ERSTELLEN EINER REIFENABRIEBSKARTE EINES VERKEHRSNETZES UND VERFAHREN ZUR NUTZUNG DER REIFENABRIEBSKARTE**
METHOD FOR CREATING A TYRE ABRASION MAP OF A TRAFFIC NETWORK AND METHOD FOR USING THE TYRE ABRASION MAP
PROCÉDÉ DE CRÉATION D'UNE CARTE D'USURE DE PNEU D'UN RÉSEAU DE TRAFIC ET PROCÉDÉ D'UTILISATION DE LA CARTE D'USURE DE PNEU

(30) Priorität: 06.03.2024 DE 102024202104
(43) Veröffentlichungstag der Anmeldung: 10.09.2025
(73) Patentinhaber: Continental Reifen Deutschland GmbH, 30175 Hannover (DE)
(72) Erfinder: Trujillo Martinez, Mauricio, Dr., 30175 Hannover (DE); Aslan, Valid, 30175 Hannover (DE)
(74) Vertreter: Continental Corporation

(56) Entgegenhaltungen:
- DE-A1- 102021 203 116
- DE-A1- 102022 121 272
- DE-B3- 102022 004 338

## Beschreibung

Die Erfindung betrifft ein Verfahren zum Erstellen einer Reifenabriebskarte eines Verkehrsnetzes, insbesondere zur Verwendung bei der Abschätzung des Abriebs von Fahrzeugreifen, eine elektronische Speichereinheit umfassend darauf gespeichert eine mit dem Verfahren erstellte Reifenabriebskarte eines Verkehrsnetzes sowie die Verwendung einer solchen Reifenabriebskarte in einem Verfahren zur Abschätzung des Abriebs von Fahrzeugreifen oder zur Planung eines Abwassersystems des Verkehrsnetzes. Offenbart wird zudem die Verwendung einer solchen Reifenabriebskarte bei der städtischen Verkehrsplanung.

Die fortschreitende technische Entwicklung und die zunehmende Digitalisierung betreffen insbesondere auch den Bereich der Fahrzeugtechnik und der Fahrzeugreifen. Es besteht ein fortgesetztes Interesse daran, bei den in Fahrzeugen eingesetzten Komponenten kontinuierlich Betriebsdaten zu erfassen, um beispielsweise die Leistungsfähigkeit und Betriebssicherheit kontinuierlich zu überwachen. Eine wichtige Information, die beispielsweise bei Fahrzeugreifen überwacht werden kann, ist dabei die Profiltiefe des Laufstreifens, da dieser Wert regelmäßig gut mit der Haltbarkeit und dem Zustand der Reifen korreliert und beispielsweise dafür genutzt werden kann, den optimalen Wechselzeitpunkt für Reifen zu bestimmen.

Es besteht grundsätzlich ein großes Interesse daran, die Profiltiefe von Reifen im Betrieb individuell für jeden Reifen und möglichst akkurat abschätzen und/oder berechnen zu können, sodass für sämtliche Reifen eines Fahrzeugs jeweils ein präziser individueller Wert über die Profiltiefe des Laufstreifens verfügbar ist, bevorzugt ohne dass der Fahrzeugführer selbst die Profiltiefe bestimmen muss.

Aus dem Stand der Technik sind verschiedene Verfahren zur Abschätzung und/oder Berechnung der Profiltiefe bekannt, die jedoch mit unterschiedlichen Vor- und Nachteilen behaftet sind. Diesbezüglicher Stand der Technik ist beispielsweise in der CN 112976956 A, der EP 0972658 B1, der US 9340211 B1, der US 2021/0302272 A1 und der DE 102018200358 A offenbart.

Beispielsweise sind Verfahren bekannt, welche durch eine Messung der Radialbeschleunigung eines Fahrzeugreifens mithilfe eines Beschleunigungssensors am Innerliner dieses Fahrzeugreifens Rückschlüsse auf die Profiltiefe des Laufstreifens des Fahrzeugreifens erlauben. Andere Verfahren setzten auf die Korrelation der beispielsweise mittels GPS-Daten bestimmten Fahrzeuggeschwindigkeit mit der Umdrehungszahl des Fahrzeugreifens, wobei die Profiltiefe des Fahrzeugreifens aus der Ausgangsprofiltiefe und der Veränderung des dynamischen Rollradius abgeleitet wird, welcher aus der Korrelation der Fahrzeuggeschwindigkeit mit der Umdrehungszahl des Fahrzeugreifens erhalten werden kann. Diese Verfahren erfordern jedoch in den Fahrzeugreifen bzw. in deren Peripherie zumeist eine zusätzliche Sensorik. Durch diese Sensorik steigen jedoch nicht nur die Herstellungskosten der Fahrzeugreifen, sondern eine im Fahrzeugreifen verbaute Sensorik ist in vielen Fällen zudem auch anfällig für Störungen, die durch die im Fahrbetrieb auftretenden starken mechanischen Belastungen verursacht werden können. Aus diesem Grund verfügen viele der Fahrzeugreifen, welche heute im Gebrauch sind, nicht über weitere Sensorik, die den Einsatz entsprechender Verfahren ermöglichen würde.

Vor diesem Hintergrund wurden datenbasierte Verfahren zur Abschätzung der Profiltiefe von Fahrzeugreifen vorgeschlagen, in denen die Profiltiefe von Fahrzeugreifen ausgehend von Fahrzeugparametern, insbesondere der Fahrzeuggeschwindigkeit bzw. der Beschleunigungswerte des Fahrzeuges, sowie einem Satz von unterschiedlichen Einflussparametern, beispielsweise zur Beschaffenheit des Fahrzeuges, zur Art der Reifen oder zu den herrschenden Umgebungsbedingungen, berechnet wird, wobei die Zahl der in die Berechnung eingehenden Einflussparameter mit dem jeweiligen Anwendungsszenario und der angestrebten Präzision der Berechnung variieren kann.

Ein wichtiger Einflussparameter ist hierbei die Beschaffenheit des Fahrbahnuntergrundes, da unterschiedliche Fahrbahnbeläge einen unterschiedlich starken Abrieb bedingen können. Insoweit wird vorgeschlagen, bei datenbasierte Verfahren zur Abschätzung der Profiltiefe von Fahrzeugreifen die Beschaffenheit des Fahrbahnuntergrundes in geeigneter Weise zu berücksichtigen, beispielsweise indem eine Fahrt auf rauem Untergrund mit einem größeren prognostizierten Abrieb verknüpft wird als eine Fahrt auf einem sehr glatten Asphalt.

In der Praxis besteht jedoch eine besondere Herausforderung darin, die Beschaffenheit des Fahrbahnuntergrundes in geeigneter Form zu erfassen und zu dokumentieren, damit diese in datenbasierten Verfahren zur Abschätzung der Profiltiefe überhaupt sinnvoll als Parameter eingesetzt werden können. Erste Ansätze gehen dabei dahin, die Untergrundbeschaffenheit unmittelbar in der Umgebung des Fahrzeuges zu erfassen, was jedoch mit hohen Anforderungen an die fahrzeugseitige Sensorik sowie Rechenkapazität verknüpft ist und vor diesem Hintergrund zuweilen als nachteilig angesehen wird.

Die DE102022004338B3 offenbart ein Verfahren zum Erstellen einer Straßenzustandskarte eines Verkehrsnetzes unter Verwendung von digitalen Aufnahmen des Verkehrsnetzes.

Die primäre Aufgabe der vorliegenden Erfindung war es, die Nachteile des Standes der Technik auszuräumen oder zumindest abzuschwächen.

Insbesondere war es eine Aufgabe der vorliegenden Erfindung, eine Lösung bereitzustellen, über die die Untergrundbeschaffenheit als Einflussparameter sinnvoll in Abschätzungsverfahren für die Abschätzung der Profiltiefe von Fahrzeugreifen integriert werden kann, wobei es eine Aufgabe war, die hierfür benötigten Informationen in einer effizient zugänglichen und unter Rückgriff auf typische Fahrparameter leicht auswertbaren Form bereitzustellen.

In diesem Zusammenhang war es eine besondere Aufgabe der vorliegenden Erfindung, ortsaufgelöste Informationen über die Untergrundbeschaffenheit, welche in einem datenbasierten Abschätzungsverfahren eingesetzt werden können, in einer zeit- und kosteneffizienten Art und Weise zu generieren, und dabei insbesondere mit vertretbarem Aufwand eine idealerweise möglichst globale Abdeckung der Informationen zur Untergrundbeschaffenheit erhalten zu können. Hierbei war es eine Maßgabe, dass die anzugebende Lösung es erlauben sollte, in zuverlässiger Art und Weise verlässliche Bewertungen der Untergrundbeschaffenheit zu erfassen und diese in geeigneter Weise nachzuhalten, sodass diese in einem datenbasierten Abschätzungsverfahren verwendet werden können.

Es war eine weitere Aufgabe der vorliegenden Erfindung, auch eine elektronische Speichereinheit bereitzustellen, welche die so zusammengestellten Informationen umfasst.

Darüber hinaus war es eine Aufgabe der vorliegenden Erfindung, eine Verwendung für die derart zusammengestellten Daten bei der Durchführung eines datenbasierten Abschätzungsverfahrens zur Abschätzung der Profiltiefe anzugeben.

Darüber hinaus war es eine sekundäre Aufgabe der vorliegenden Erfindung, eine alternative Verwendung für die entsprechenden Informationen bereitzustellen, bei der die derart erhaltenen Daten für ein über die Abschätzung des Abriebs hinausgehenden Zweck verwendet werden können.

Die Erfinder der vorliegenden Erfindung haben nunmehr gefunden, dass sich die vorstehend beschriebenen Aufgaben lösen lassen, wenn ein Verfahren zum Erstellen einer Reifenabriebskarte eines Verkehrsnetzes zur Anwendung kommt, wobei die Reifenabriebskarte zu den Netzabschnitten des Verkehrsnetzes jeweils unterschiedliche Abriebsbewertungen umfasst, welche den Netzabschnitten in Abhängigkeit von zumindest zwei Abriebsbewertungsfaktoren zugewiesen werden, wobei als Abriebsbewertungsfaktoren Größen verwendet werden, welche sich aus digitalen Aufnahmen des Verkehrsnetzes extrahieren lassen, nämlich der Beschaffenheit des erkennbaren Fahrbahnuntergrundes sowie des Ausmaßes der auf den Aufnahmen erkennbaren Gummiablagerung, wie es in den Ansprüchen definiert ist.

Die Erfinder haben entsprechend erkannt, dass es für die Einbindung in datenbasierte Abschätzungsverfahren zur Abschätzung des Abriebs von Fahrzeugreifen optimal ist, ortsaufgelöste Informationen über die Abriebslastigkeit verschiedener Netzabschnitte des Verkehrsnetzes zusammenzustellen und diese in Form einer Reifenabriebskarte bereitzustellen, welche besonders leicht mit der Fahrtroute eines Fahrzeuges korreliert werden kann, um dadurch die Untergrundbeschaffenheit in die Abschätzung des Reifenabriebs einfließen zu lassen. Dabei wurde überraschenderweise gefunden, dass es in vorteilhafter Weise möglich ist, eine hinreichend gute Differenzierung der unterschiedlichen Abriebsneigungen in Form von Abriebsbewertungen der Netzabschnitte aus digitalen Aufnahmen der entsprechenden Netzabschnitte abzuleiten, insbesondere aus Luftbildaufnahmen von Drohnen und/oder Satellitenbildern. Dies ist in vorteilhafter Weise möglich, wenn für die Ableitung der Abriebsbewertung zwei Abriebsbewertungsfaktoren einfließen, nämlich zum einen die erkennbare Grundbeschaffenheit des Fahrbahnuntergrundes, beispielsweise die Art des Asphalts, sowie als zweiten Abriebsbewertungsfaktor das erkennbare Ausmaß der auf den digitalen Aufnahmen erkennbaren Gummiablagerungen, welches sozusagen als zusätzliche Quantifizierung des in der Praxis tatsächlich auftretenden Gummiabriebs herangezogen werden kann, wobei in besonders bevorzugten Ausgestaltungen zudem das Fahraufkommen in dem entsprechenden Netzabschnitt berücksichtigt wird, um ein Maß für den relativen Gummiabrieb pro Fahrzeug abzuschätzen.

Die derart erhaltene Reifenabriebskarte kann in besonders vorteilhafter Weise als Einflussparameter in datenbasierten Abschätzungsverfahren für den Reifenabrieb verwendet werden, wo sie besonders leicht mit zeitaufgelösten Positionsdaten, wie sie beispielsweise für die meisten Fahrzeuge mittels GPS zu erhalten sind, korreliert werden kann, um der vom Fahrzeug durch die verschiedenen Netzabschnitte zurückgelegten Strecke eine Abriebsprognose zuzuweisen, welche darüber hinaus auch mit weiteren Einflussparametern, beispielsweise der gefahrenen Geschwindigkeit und/oder der Witterungsbedingungen, korreliert werden kann.

Im Zuge der Entwicklung der vorliegenden Erfindung haben die Erfinder dabei gefunden, dass neben der ursprünglich angedachten Verwendung als Einflussparameter in einem datenbasierten Abschätzungsverfahren auch eine weitere besonders vorteilhafte Verwendung für entsprechende Reifenabriebskarten denkbar ist. Die erhaltenen Reifenabriebskarten erlauben nämlich eine Bewertung des Verkehrsnetzes hinsichtlich der Abriebsneigung der einzelnen Netzabschnitte und erlauben es'Stadtplanern zwanglos, Schwerpunkte des Reifenabriebs zu identifizieren beziehungsweise den auf einer vorgegebenen Strecke zu erwartenden Reifenabrieb abzuschätzen. Aus Sicht des Verkehrsnetzes betrachtet erlaubt dies die vorteilhafte Möglichkeit, Maßnahmen zum Umgang mit Reifenabrieb, insbesondere den dabei auftretenden mikroskopischen Gummiverunreinigungen, vorzusehen. Dies betrifft insbesondere die Installation von spezifischen Filtereinheiten, welche Reifenabrieb aus dem Abwasser entfernen können. Hierdurch ist es möglich, die regelmäßig sehr teuren und wartungsintensiven Filtereinheiten zur Entfernung von Reifenabrieb effizienzoptimiert genau an den Punkten des Straßennetzes vorzusehen, in denen mit einem besonders hohen Aufkommen von Reifenabrieb zu rechnen ist, wobei dies gegebenenfalls wiederum mit der Information über das Fahrzeugaufkommen kombiniert werden kann.

Die vorstehend genannten Aufgaben werden entsprechend durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden. Merkmale bevorzugter elektronischer Speichereinheiten und Verwendungen ergeben sich aus den Merkmalen bevorzugter Verfahren.

Die Erfindung betrifft insbesondere ein Verfahren zum Erstellen einer Reifenabriebskarte eines Verkehrsnetzes, insbesondere zur Verwendung bei der Abschätzung des Abriebs von Fahrzeugreifen, umfassend die Verfahrensschritte:
a) Bereitstellen von digitalen Aufnahmen eines Verkehrsnetzes,
b) Identifizieren von Verkehrswegen des Verkehrsnetzes auf den digitalen Aufnahmen,
c) virtuelles Zerlegen der Verkehrswege des Verkehrsnetzes in eine Vielzahl von Netzabschnitten,
d) Zuweisen von Abriebsbewertungen zu den Netzabschnitten des Verkehrsnetzes zum Erhalt einer Reifenabriebskarte des Verkehrsnetzes, umfassend für verschiedene Netzabschnitte des Verkehrsnetzes unterschiedliche Abriebsbewertungen,

wobei die Zuweisung der Abriebsbewertung zu den Netzabschnitten in Abhängigkeit zumindest eines ersten Abriebsbewertungsfaktors und eines zweiten Abriebsbewertungsfaktors erfolgt,
wobei der erste Abriebsbewertungsfaktor die Beschaffenheit des auf den digitalen Aufnahmen erkennbare Fahrbahnuntergrunds des jeweiligen Netzabschnitts ist, und
wobei der zweite Abriebsbewertungsfaktor das Ausmaß der auf den digitalen Aufnahmen erkennbaren Gummiablagerungen ist,
wobei die Verfahrensschritte a), b), c) und d) von einer elektronischen Datenverarbeitungsvorrichtung oder unter Verwendung einer elektronischen Datenverarbeitungsvorrichtung durchgeführt werden, wobei die elektronische Datenverarbeitungsvorrichtung eine elektronische Speichereinheit umfasst.

Das erfindungsgemäße Verfahren ist ein Verfahren zum Erstellen einer Reifenabriebskarte eines Verkehrsnetzes. In Übereinstimmung mit dem fachmännischen Verständnis dient das erfindungsgemäße Verfahren somit dem Erhalt von Kartenmaterial, insbesondere digitalem Kartenmaterial, welches eine ortsaufgelöste Bewertung des Abriebs ermöglicht und insbesondere als Einflussfaktor in einem datenbasierten Abschätzungsverfahren bei der Abschätzung des Abriebs von Fahrzeugreifen eines Fahrzeugs, welches sich in dem abgebildeten Verkehrsnetz bewegt, erlaubt.

Bei dem erfindungsgemäßen Verfahren handelt es sich um ein zumindest teilweise computerimplementiertes Verfahren, bei dem zumindest die vorstehend definierten Schritte a) bis d) jeweils von einer elektronischen Datenverarbeitungsvorrichtung durchgeführt werden oder von einem Menschen unter Verwendung einer elektronischen Datenverarbeitungsvorrichtung durchgeführt werden.

Auch wenn das erfindungsgemäße Verfahren prinzipiell weitere Schritte umfassen kann, von denen möglicherweise auch einzelne Schritte nicht durch eine elektronische Datenverarbeitungsvorrichtung durchgeführt werden, ist es für die weit überwiegende Zahl der Anwendungen bevorzugt, wenn auch über die Verfahrensschritte a) bis d) hinaus sämtliche Verfahrensschritte des Verfahrens computerimplementiert werden.

Ausgangspunkt für das erfindungsgemäße Verfahren ist in Verfahrensschritt a) das Bereitstellen von digitalen Aufnahmen des Verkehrsnetzes, für das die Reifenabriebskarte erstellt werden soll. In Übereinstimmung mit dem fachmännischen Verständnis handelt es sich bei einem Verkehrsnetz um eine Verknüpfung von zahlreichen befahrbaren Untergründen, auf denen in Fahrzeug sich prinzipiell bewegen kann. Auch wenn in einem breiten Wortsinne manchmal auch Wasserstraßen und Schienen einem Verkehrsnetz zugeordnet werden, versteht der Fachmann im Lichte der vorstehenden Erläuterungen zwanglos, dass das zu betrachtende Verkehrsnetz zumindest nicht ausschließlich aus Wasserwegen oder Schienen besteht, sodass es zumindest teilweise um Verkehrswege geht, welche von bereiften Fahrzeugen befahren werden. Mit anderen Worten handelt es sich um ein erfindungsgemäßes Verfahren, wobei das Verkehrsnetz eine Vielzahl von miteinander verbundenen Verkehrswegen umfasst. Wiederum mit anderen Worten handelt es sich um ein erfindungsgemäßes Verfahren, wobei die Verkehrswege Verkehrswege für nicht schienengebundene Landfahrzeuge sind, bevorzugt für PKW und LKW. Beispielhaft ist ein erfindungsgemäßes Verfahren, wobei die Verkehrswege ausgewählt sind aus der Gruppe bestehend aus Straßen, Wegen und Plätzen.

Die digitalen Aufnahmen des Verkehrsnetzes dienen später dazu, die Abriebsbewertungsfaktoren zu ermitteln, ausgehend von denen die die Abriebsbewertung abgeleitet wird. Zumindest theoretisch wäre es denkbar, entsprechende digitale Aufnahmen über landgestützte Bilderfassungssysteme zu erfassen, um diese im erfindungsgemäßen Verfahren bereitzustellen. Nach Einschätzung der Erfinder eignen sich hierfür theoretisch beispielsweise mit Kameras ausgerüstete Fahrzeuge, wie sie beispielsweise von Angeboten wie "Google Street View" bekannt sind. Die Erfinder sind jedoch zu der Einschätzung gelangt, dass der Rückgriff auf entsprechende digitale Aufnahmen in den meisten Fällen weniger bevorzugt sein wird. Entsprechende mit fahrzeuggestützten Kameras aufgenommene Aufnahmen des Verkehrsnetzes sind regelmäßig mit einem erheblichen Aufwand in der Herstellung verbunden und entsprechend häufig weniger aktuell und/oder nicht frei bzw. kostengünstig verfügbar. Zudem ist die Abdeckung des Verkehrsnetzes wegen des hohen Erfassungsaufwands häufig nicht ausreichend, insbesondere auch auf Wegen oder Parkplätzen. Außerdem haben entsprechende fahrzeuggestützte Aufnahmen nach Einschätzung der Erfinder häufig einen für die Verwendung im erfindungsgemäßen Verfahren ungünstigen Blickwinkel auf den Fahrbahnuntergrund, durch welchen die Auswertung erschwert wird.

Bevorzugt ist stattdessen die Nutzung von Luftbildaufnahmen und/oder von Satellitenaufnahmen. Luftbildaufnahmen können heutzutage insbesondere durch Drohnen vergleichsweise schnell und kosteneffizient sowie in einer sehr hohen Qualität erhalten werden. Für Satellitenaufnahmen spricht, dass diese häufig aus verschiedenen Quellen öffentlich zugänglich sind und von verschiedenen Anbietern auch für kommerzielle Nutzungszwecke relativ leicht bezogen werden können. Zudem erlauben Satellitenaufnahmen in effizienter Weise die Anfertigung von Reifenabriebskarten mit quasi weltweiter Abdeckung, ohne dass ein erheblicher Aufwand für die Aufnahme von Luftbildaufnahmen erforderlich wäre. Bevorzugt ist entsprechend ein erfindungsgemäßes Verfahren, wobei die digitalen Aufnahmen des Verkehrsnetzes Luftbildaufnahmen und/oder Satellitenaufnahmen sind, bevorzugt Satellitenaufnahmen. Besonders bevorzugt ist ein erfindungsgemäßes Verfahren, wobei die digitalen Aufnahmen aus öffentlich zugänglichen digitalen Aufnahmen, bevorzugt öffentlich zugänglichen Satellitenaufnahmen, bereitgestellt wird.

Im Verfahrensschritt b) werden nunmehr auf den digitalen Aufnahmen Verkehrswege des Verkehrsnetzes identifiziert, sodass Abschnitte der digitalen Aufnahmen Straßen, Wegen und anderen Verkehrswegen zugeordnet werden. Auch wenn es potenziell denkbar wäre, die Verkehrswege auf den digitalen Aufnahmen jeweils händisch zu identifizieren und als solche bspw. in einer Software zu attributieren, ist es in der Praxis vorteilhafterweise sehr leicht möglich, dies mit digitalen Methoden vorzunehmen. Nach Einschätzung der Erfinder ist es dabei dank der regelmäßig leichten Erkennbarkeit von Verkehrswegen auch mit einer vergleichsweise einfachen Bilderkennungssoftware leicht möglich, die entsprechende Identifikation der Verkehrswege vorzunehmen oder zumindest einen Ausgangsidentifikationsvorschlag zu erhalten, welcher anschließend nur noch manuell leicht korrigiert werden muss. Bevorzugt ist somit ein erfindungsgemäßes Verfahren, wobei das Identifizieren von Verkehrswegen des Verkehrsnetzes auf den digitalen Aufnahmen durch einen ersten Bilderkennungs-Algorithmus, bevorzugt einen auf maschinellem Lernen basierenden ersten Bilderkennungs-Algorithmus, erfolgt.

Unter den softwarebasierten Lösungen zum Identifizieren der Verkehrswege erachten die Erfinder insbesondere zwei Strategien für besonders sinnvoll. Dank der hohen Verfügbarkeit digitaler Aufnahmen von Verkehrsnetzen und der zumeist starken Kontraste zwischen dem Verkehrsweg und der Umgebung ist es besonders leicht, eine künstliche Intelligenz dahingehend zu trainieren, die erforderliche Identifikation der Verkehrswege in den digitalen Aufnahmen vorzunehmen. Geeignete Softwareprogramme, welche auf maschinellem Lernen basieren und durch entsprechende Trainingssets lediglich noch für den vorgesehenen Einsatz trainiert werden müssen, sind von zahlreichen Anbietern kommerziell erhältlich und können vom Fachmann relativ zwanglos auf die vorliegenden Erfordernisse adaptiert werden. Bevorzugt ist entsprechend ein erfindungsgemäßes Verfahren, wobei das Identifizieren von Verkehrswegen des Verkehrsnetzes mit einem auf maschinellem Lernen basierenden Identifikationsmodul erfolgt, welches auf der elektronischen Speichereinheit gespeichert ist, wobei die elektronische Datenverarbeitungsvorrichtung dazu eingerichtet ist, die digitalen Aufnahmen als Eingabe in das Identifikationsmodul zu geben und die Verkehrswege des Verkehrsnetzes auf den digitalen Aufnahmen mit dem Identifikationsmodul zu identifizieren, wobei das Identifikationsmodul dazu trainiert ist, in digitalen Aufnahmen eines Verkehrsnetzes die Verkehrswege des Verkehrsnetzes zu identifizieren, wobei das Training mittels überwachtem Lernen mit einem Satz von Trainingsdaten erfolgt, welcher eine Vielzahl von Trainingsaufnahmen von Verkehrsnetzen umfasst, in denen die Verkehrswege des Verkehrsnetzes identifiziert sind.

Insbesondere im Falle der Verwendung von Satellitenaufnahmen ist es jedoch besonders bevorzugt, das Identifizieren der Verkehrswege einfach durch eine Überlagerung mit einer digitalen Karte des Verkehrsnetzes zu realisieren. Entsprechende Überlagerungen aus den Karten eines Verkehrsnetzes und Satellitenaufnahmen sind dabei in zahlreichen Onlinediensten bereits verfügbar, sodass prinzipiell die Verfahrensschritte a) und b) auch dahingehend kombiniert werden können, dass digitale Aufnahmen bereitgestellt werden, auf denen die Verkehrswege des Verkehrsnetzes bereits identifiziert sind, beispielsweise weil diese zum Zwecke der kommerziellen Nutzung von einem Anbieter wie beispielsweise Google bezogen werden. Bevorzugt ist somit ein erfindungsgemäßes Verfahren, wobei das Identifizieren von Verkehrswegen des Verkehrsnetzes auf den digitalen Aufnahmen durch den Abgleich der digitalen Aufnahmen mit einer digitalen Karte des Verkehrsnetzes erfolgt,
und/oder
wobei das Identifizieren von Verkehrswegen des Verkehrsnetzes auf den digitalen Aufnahmen durch das Überlagern der digitalen Aufnahmen mit einer digitalen Karte des Verkehrsnetzes erfolgt.

In Verfahrensschritt c) erfolgt nunmehr ausgehend von den digitalen Aufnahmen und den darin identifizierten Verkehrswegen eine virtuelle Vereinzelung von Teilelementen dieser Verkehrswege in einzelne Netzabschnitte. Dies bedeutet, dass die auf den Aufnahmen des Verkehrsnetzes identifizierten Verkehrswege virtuell in eine Vielzahl von Netzabschnitten zerlegt werden. Prinzipiell ist es hierbei möglich, als Netzabschnitte gesamte Straßenverläufe und/oder gesamte Wege zu definieren, sodass das Verkehrsnetz durch eine Vielzahl von Wegen, Straßen und Plätzen als Vielzahl von Netzabschnitten gebildet wird. Nach Einschätzung der Erfinder ist es jedoch besonders bevorzugt, eine möglichst hohe Ortsauflösung für die angestrebte Abriebsbewertung zu realisieren. Hierfür schlagen die Erfinder vor, dass es zielführend ist, die Verkehrswege, d.h. beispielsweise eine Straße, jeweils in eine Mehrzahl von Netzabschnitten, d.h. zumindest zwei oder mehr, aufzuteilen. Dies kann beispielsweise dadurch erfolgen, dass Verkehrswege zwischen Kreuzungen segmentiert werden, sodass für eine Straße jeweils der zwischen zwei Kreuzungen liegende Abschnitt als Netzabschnitt definiert wird. Bevorzugt ist ein erfindungsgemäßes Verfahren, wobei das virtuelle Zerlegen der Verkehrswege des Verkehrsnetzes so erfolgt, dass jeder Verkehrsweg eine Mehrzahl von Netzabschnitten umfasst.

Besonders bevorzugt ist es nach Einschätzung der Erfinder jedoch, die Verkehrswege des Verkehrsnetzes jeweils nach Art eines Rasters in eine Vielzahl von Netzabschnitten zu zerteilen. Hierbei sind gleichkantige Polygone mit einer größeren Zahl von Kanten bevorzugt, weil diese bei der Verarbeitung den Vorteil aufweisen, dass der Abstand der Kanten zum Zentrum des Polygons gleichmäßiger ist. Bevorzugt ist ein erfindungsgemäßes Verfahren, wobei das virtuelle Zerlegen der Verkehrswege des Verkehrsnetzes in Netzabschnitte vorbestimmter Abmessungen erfolgt, bevorzugt in gleichkantige Polygone, beispielsweise Plan-Rechtecke.

In Verfahrensschritt d) wird nun den Netzabschnitten, bevorzugt sämtlichen Netzabschnitten des Verkehrsnetzes, eine Abriebsbewertung zugeordnet. Für die weit überwiegende Zahl der Fälle relevant ist dabei ein erfindungsgemäßes Verfahren, wobei jedem Netzabschnitt genau eine Abriebsbewertung zugeordnet wird.

In Übereinstimmung mit dem fachmännischen Verständnis handelt es sich bei dieser Abriebsbewertung um eine Quantifizierung, beispielsweise als numerischer Wert, welcher ein Maß für den beim Durchfahren des entsprechenden Netzabschnitts prognostizierten Reifenabrieb ist. Neben der Zuweisung eines Wertes auf einer Skala ist es nach Einschätzung der Erfinder mit Blick auf den benötigen Rechenaufwand und die erforderliche Komplexität bevorzugt, eine Klassifikation mit verschiedenen Klassen der Abriebsbewertung vorzusehen, beispielsweise als "sehr gering", "gering", "durchschnittlich", "hoch" und "sehr hoch", in die die einzelnen Netzabschnitte in Abhängigkeit der Abriebsbewertungsfaktoren einklassiert werden können. Mit anderen Worten handelt es sich um ein erfindungsgemäßes Verfahren, wobei die Abriebsbewertung jedes Netzabschnitts mit dem Ausmaß des beim Durchfahren des Netzabschnitts zu erwartenden Reifenabriebs korreliert. Bevorzugt ist ein erfindungsgemäßes Verfahren, wobei jedem Netzabschnitt eine Abriebsbewertung in Abhängigkeit zumindest des ersten Abriebsbewertungsfaktors und des zweiten Abriebsbewertungsfaktors aus einer vorgegebenen Zahl von vordefinierten Abriebsbewertungen zugewiesen wird, wobei die vordefinierten Abriebsbewertungen Klassen einer Klassifikation darstellen, in die die Netzabschnitt in Abhängigkeit zumindest des ersten Abriebsbewertungsfaktors und des zweiten Abriebsbewertungsfaktors klassiert werden.

Die Zuweisung einer Abriebsbewertung für jeden Netzabschnitt, beispielsweise durch Klassierung in die Klassen einer Klassifikation, erfolgt im erfindungsgemäßen Verfahren auf der Grundlage und in Abhängigkeit von zumindest zwei unterschiedlichen Abriebsbewertungsfaktoren.

Der erste Abriebsbewertungsfaktor berücksichtigt die erkennbare Beschaffenheit des Fahrbahnuntergrundes auf den digitalen Aufnahmen. Der erste Abriebsbewertungsfaktor reflektiert somit die erkennbare Beschaffenheit des Fahrbahnuntergrundes im jeweiligen Netzabschnitt. Zu der Fahrbahnbeschaffenheit tragen dabei das erkennbare Fahrbahnmaterial sowie auch der Fahrbahnzustand bei. Beide Beiträge sind durch Auswertung des Bildmaterials in vorteilhafter Weise relativ zuverlässig zu erhalten, indem die Farbe beziehungsweise der Schattenwurf auf den Aufnahmen bewertet wird. Während beispielsweise die Unterscheidung von Geröll oder unbefestigten Wegen besonders leicht ist, zeigt sich in den Versuchen der Erfinder, dass sich über die Farbgebung sogar verschiedene Asphaltmaterialien in vielen Fällen gut identifizieren lassen. Ebenfalls ist ein schlechter Fahrbahnzustand, beispielsweise durch Schlaglöcher auf den digitalen Aufnahmen zumeist leicht zu erkennen. Bevorzugt ist ein erfindungsgemäßes Verfahren, wobei die Beschaffenheit des auf den digitalen Aufnahmen erkennbaren Fahrbahnuntergrundes des jeweiligen Netzabschnitts bewertet wird ausgehend vom Fahrbahnmaterial, beispielsweise Geröll, Erdreich und verschiedenen Asphaltmaterialien, und dem Fahrbahnzustand, insbesondere der auf den digitalen Aufnahmen erkennbaren Löchern, Rissen und Vertiefungen in der Fahrbahn, um daraus den erste Abriebsbewertungsfaktor abzuleiten.

Auch die Quantifizierung des ersten Abriebsbewertungsfaktors kann prinzipiell durch eine menschliche Eingabe erfolgen, welche als Input in eine entsprechende Software gegeben wird. Nach Einschätzung der Erfinder ist es jedoch für die weit überwiegende Zahl der Fälle vorteilhaft, durch den Rückgriff auf eine automatisierte Bilderkennung nicht nur subjektive Einflussfaktoren möglichst weitgehend zu reduzieren, sondern zudem auch die Zeit- und Kosteneffizienz der Untergrundbewertung zu verbessern. Auch wenn es nach Einschätzung der Erfinder möglich ist, die Festlegung des ersten Abriebsbewertungsfaktors wiederum mit vergleichsweise einfacher Bildauswertungssoftware zu realisieren, welche beispielsweise den Fokus auf die Farbe des jeweiligen Untergrundes legt, erachten es die Erfinder für besonders vorteilhaft, den ersten Abriebsbewertungsfaktor unter Einsatz solcher Bilderkennungssoftware durchzuführen, welche auf maschinellem Lernen basiert und welche dafür trainiert wird, den ersten Abriebsbewertungsfaktor ausgehend von digitalen Aufnahmen abzuleiten. Auch die hierfür benötigte Software, welche lediglich noch zu dem Zwecke trainiert werden muss, ist von zahlreichen Anbietern kommerziell erhältlich und kann vom Fachmann insbesondere dank der relativ leichten Verfügbarkeit geeigneter digitaler Aufnahmen, welche lediglich nur hinsichtlich des ersten Abriebsbewertungsfaktors attributiert werden müssen, effizient für den vorgesehenen Zweck trainiert werden.

Bevorzugt ist ein erfindungsgemäßes Verfahren, wobei die Bewertung der Beschaffenheit des auf den digitalen Aufnahmen erkennbaren Fahrbahnuntergrundes des jeweiligen Netzabschnitts durch einen zweiten Bilderkennungs-Algorithmus, bevorzugt einen auf maschinellem Lernen basierenden zweiten Bilderkennungs-Algorithmus, erfolgt. Besonders bevorzugt ist ein erfindungsgemäßes Verfahren, wobei die Beschaffenheit des auf den digitalen Aufnahmen erkennbaren Fahrbahnuntergrundes des jeweiligen Netzabschnitts zur Ableitung des ersten Abriebsbewertungsfaktors mit einem auf maschinellem Lernen basierenden Untergrundbewertungsmodul bewertet wird, welches auf der elektronischen Speichereinheit gespeichert ist, wobei die elektronische Datenverarbeitungsvorrichtung dazu eingerichtet ist, die digitalen Aufnahmen des jeweiligen Netzabschnitts als Eingabe in das Untergrundbewertungsmodul zu geben und die Beschaffenheit des auf den digitalen Aufnahmen erkennbaren Fahrbahnuntergrundes zu bewerten, wobei das Untergrundbewertungsmodul dazu trainiert ist, in digitalen Aufnahmen eines Netzabschnitts die Beschaffenheit des auf den digitalen Aufnahmen erkennbaren Fahrbahnuntergrundes zu bewerten, wobei das Training mittels überwachtem Lernen mit einem Satz von Trainingsdaten erfolgt, welcher eine Vielzahl von Trainingsaufnahmen von Netzabschnitten umfasst, in denen dem erkennbaren Fahrbahnuntergrund eine Beschaffenheit zugeordnet ist, wobei das Untergrundbewertungsmodul bevorzugt dazu trainiert ist, aus der Beschaffenheit des auf den digitalen Aufnahmen erkennbaren Fahrbahnuntergrundes den erste Abriebsbewertungsfaktor abzuleiten.

Zumindest grundsätzlich ist es denkbar, das erfindungsgemäße Verfahren so durchzuführen, dass für jeden Netzabschnitt jeweils nur eine digitale Aufnahme herangezogen wird. Nach Einschätzung der Erfinder ist es jedoch besonders zweckmäßig, zum Ableiten von zuverlässigen Abriebsbewertungsfaktoren vielmehr zwei oder mehr Aufnahmen des jeweiligen Netzabschnitts bei der Zuweisung des ersten Abriebsbewertungsfaktors zu berücksichtigen. Durch die Einbeziehung von unterschiedlichen Aufnahmen des gleichen Netzabschnittes oder zumindest von dessen Teilen, lassen sich störende Einflussfaktoren, welche nicht unmittelbar mit der Untergrundbeschaffenheit korrelieren, effizient ausblenden, insbesondere beim Einsatz von künstlicher Intelligenz. Gerade Aufnahmen in unterschiedlichen Beleuchtungssituationen und/oder Aufnahmeperspektiven erlauben eine zuverlässigere Einschätzung des Untergrundes, insbesondere wenn die Aufnahmen zudem unterschiedliche Witterungsbedingungen berücksichtigen, da die Zuordnung des Fahrbahnmaterials besonders effizient möglich ist, wenn dessen Färbung im trockenen und im nassen Zustand verfügbar ist. Bevorzugt ist ein erfindungsgemäßes Verfahren, wobei die Beschaffenheit des auf den digitalen Aufnahmen erkennbaren Fahrbahnuntergrundes des jeweiligen Netzabschnitts zur Ableitung des ersten Abriebsbewertungsfaktors unter Berücksichtigung von zwei oder mehr, bevorzugt drei oder mehr, besonders bevorzugt einer Vielzahl von verschiedenen digitalen Aufnahmen des Netzabschnittes erfolgt. Besonders bevorzugt ist ein erfindungsgemäßes Verfahren, wobei die verschiedenen digitalen Aufnahmen des Netzabschnittes in unterschiedlichen Beleuchtungssituationen aufgenommen wurden. Besonders bevorzugt ist zusätzlich oder alternativ ein erfindungsgemäßes Verfahren, wobei die verschiedenen digitalen Aufnahmen des Netzabschnittes unter unterschiedlichen Witterungsbedingungen aufgenommen wurden. Besonders bevorzugt ist wiederum zusätzlich oder alternativ ein erfindungsgemäßes Verfahren, wobei die verschiedenen digitalen Aufnahmen des Netzabschnittes zu unterschiedlichen Zeiten aufgenommen wurden, besonders bevorzugt zu unterschiedlichen Tageszeiten und/oder unterschiedlichen Jahreszeiten. Besonders bevorzugt ist ebenfalls zusätzlich oder alternativ ein erfindungsgemäßes Verfahren, wobei die verschiedenen digitalen Aufnahmen des Netzabschnittes in unterschiedlichen Kamerapositionen aufgenommen wurden.

Als zweiten Abriebsbewertungsfaktor, in dessen Abhängigkeit die Zuweisung der Abriebsbewertung zu den Netzabschnitten erfolgt, dient das Ausmaß der auf den digitalen Aufnahmen erkennbaren Gummiablagerungen. Solche Gummiablagerungen sind insbesondere das Resultat von tatsächlich bereits erfolgtem Reifenabrieb. Die Erfinder haben erkannt, dass sich auf digitalen Aufnahmen auch der auf einem Verkehrsweg bereits aufliegende Abrieb abschätzen lässt und dass dieser ein wichtiger Eingabefaktor bei der Erstellung der Reifenabriebskarte ist. Dabei kann es in der Praxis sehr wohl sein, dass einige Verkehrswege beziehungsweise deren Netzabschnitte auf den Aufnahmen keinen Reifenabrieb erkennen lassen, beispielsweise weil das Verkehrsaufkommen zu gering ist. Solche Netzabschnitte können zweckmäßigerweise der niedrigsten Kategorie zugeordnet werden. Für den Erhalt besonders vorteilhafter Abriebsbewertungen ist es jedoch wichtig, solche Netzabschnitte, in denen nachweislich ein starker Reifenabrieb erfolgt, bei der Abriebsbewertung besonders zu würdigen und diesen Umstand besonders zu berücksichtigen. Auch für die Ermittlung des zweiten Abriebsbewertungsfaktors ist nach Einschätzung der Erfinder der Einsatz von maschinellem Lernen besonders vorteilhaft. Darüber hinaus gelten auch mit Blick auf den bevorzugten Einsatz von zwei oder mehr Bildaufnahmen die vorstehenden Ausführungen analog. Bevorzugt ist somit ein erfindungsgemäßes Verfahren, wobei das Ausmaß der auf den digitalen Aufnahmen des jeweiligen Netzabschnitts erkennbaren Gummiablagerungen durch einen dritten Bilderkennungs-Algorithmus, bevorzugt einen auf maschinellem Lernen basierenden dritten Bilderkennungs-Algorithmus, erfolgt. Besonders bevorzugt ist ein erfindungsgemäßes Verfahren, wobei das Ausmaß der auf den digitalen Aufnahmen des jeweiligen Netzabschnitts erkennbaren Gummiablagerungen mit einem auf maschinellem Lernen basierenden Ablagerungsbewertungsmodul bewertet wird, welches auf der elektronischen Speichereinheit gespeichert ist, wobei die elektronische Datenverarbeitungsvorrichtung dazu eingerichtet ist, die digitalen Aufnahmen des jeweiligen Netzabschnitts als Eingabe in das Ablagerungsbewertungsmodul zu geben und das Ausmaß der auf den digitalen Aufnahmen des jeweiligen Netzabschnitts erkennbaren Gummiablagerungen zu bewerten, wobei das Ablagerungsbewertungsmodul dazu trainiert ist, in digitalen Aufnahmen eines Netzabschnitts das Ausmaß der auf den digitalen Aufnahmen des jeweiligen Netzabschnitts erkennbaren Gummiablagerungen zu bewerten, wobei das Training mittels überwachtem Lernen mit einem Satz von Trainingsdaten erfolgt, welcher eine Vielzahl von Trainingsaufnahmen von Netzabschnitten umfasst, in denen das Ausmaß der auf den digitalen Aufnahmen des jeweiligen Netzabschnitts erkennbaren Gummiablagerungen qualitativ oder quantitativ bekannt ist, wobei das Ablagerungsbewertungsmodul bevorzugt dazu trainiert ist, das Ausmaß der auf den digitalen Aufnahmen des jeweiligen Netzabschnitts erkennbaren Gummiablagerungen den zweiten Abriebsbewertungsfaktor abzuleiten.

Bevorzugt ist zusätzlich oder alternativ ein erfindungsgemäßes Verfahren, wobei das Ausmaß der auf den digitalen Aufnahmen des jeweiligen Netzabschnitts erkennbaren Gummiablagerungen des jeweiligen Netzabschnitts zur Ableitung des zweiten Abriebsbewertungsfaktors unter Berücksichtigung von zwei oder mehr, bevorzugt drei oder mehr, besonders bevorzugt einer Vielzahl von verschiedenen digitalen Aufnahmen des Netzabschnittes erfolgt. Besonders bevorzugt ist zusätzlich oder alternativ ein erfindungsgemäßes Verfahren, wobei die verschiedenen digitalen Aufnahmen des Netzabschnittes in unterschiedlichen Beleuchtungssituationen aufgenommen wurden. Besonders bevorzugt ist zusätzlich oder alternativ auch ein erfindungsgemäßes Verfahren, wobei die verschiedenen digitalen Aufnahmen des Netzabschnittes unter unterschiedlichen Witterungsbedingungen aufgenommen wurden. Besonders bevorzugt ist wiederum zusätzlich oder alternativ ein erfindungsgemäßes Verfahren, wobei die verschiedenen digitalen Aufnahmen des Netzabschnittes zu unterschiedlichen Zeiten aufgenommen wurden, besonders bevorzugt zu unterschiedlichen Tageszeiten und/oder unterschiedlichen Jahreszeiten. Besonders bevorzugt ist ebenfalls zusätzlich oder alternativ ein erfindungsgemäßes Verfahren, wobei die verschiedenen digitalen Aufnahmen des Netzabschnittes in unterschiedlichen Kamerapositionen aufgenommen wurden.

Nach Einschätzung der Erfinder lassen sich in vorteilhafter Weise unter Einbeziehung des erkennbaren Reifenabriebs bereits sehr leistungsfähige Reifenabriebskarten generieren. Gleichzeitig beinhaltet eine Berücksichtigung des absoluten Reifenabriebs das Risiko, dass Strecken als reifenschonender bewertet werden, als sie es tatsächlich sind, nur weil diese weniger befahren sind und entsprechend weniger Reifenabrieb auf der Fahrbahn verbleibt. Umgekehrt können auch vergleichsweise reifenschonenden Netzabschnitten schlechtere Abriebsbewertungen zugewiesen werden, weil diese stark befahren sind und somit in Summe trotz einer vergleichsweise reifenschonenden Fahrbahn viel Abrieb verbleibt. Um diesen Effekt auszugleichen, schlagen die Erfinder vor, dass die Bewertung des auf der Fahrbahn erkennbaren Reifenabriebs in Form von Gummiablagerungen vorteilhafterweise unter Einbeziehung des Verkehrsaufkommens in dem Netzabschnitt erfolgen soll. Vorteilhafterweise sind Informationen über das Verkehrsaufkommen auf den meisten Verkehrswegen, zumindest jedoch vergleichsweise verlässliche Schätzungen des Verkehrsaufkommens, für einen Großteil der in der Praxis relevanten Verkehrswege verfügbar, insbesondere auf Hauptverkehrswegen wie Autobahnen und Ähnlichem. Durch die Einbeziehung des tatsächlichen Verkehrsaufkommens ist es vorteilhafterweise möglich, einen starken Gummibelag auf der Fahrbahn, welcher vornehmlich durch ein hohes Verkehrsaufkommen bedingt ist, bei der Zuweisung der Abriebsbewertung weniger stark zu gewichten. Zudem kann der Beitrag des zweiten Abriebsbewertungsfaktors bei der Zuweisung der Abriebsbewertung zu solchen Netzabschnitten, welche ein sehr geringes Verkehrsaufkommen zeigen, beispielsweise Seitenstraßen oder Feldwege, stark reduziert werden, um den Einfluss dieses Parameters zu verringern. Bevorzugt ist entsprechend ein erfindungsgemäßes Verfahren, wobei das Ausmaß der auf den digitalen Aufnahmen des jeweiligen Netzabschnitts erkennbaren Gummiablagerungen mit einem dem Netzabschnitt zugeordneten Verkehrsaufkommenswert korreliert wird, um den zweite Abriebsbewertungsfaktor abzuleiten, wobei der zweite Abriebsbewertungsfaktor für ein bestimmtes Ausmaß an erkennbarer Gummiablagerung umso kleiner ist, umso größer der Verkehrsaufkommenswert des Netzabschnitts ist.

Wie vorstehend erläutert, lassen sich die Identifikation der Verkehrswege auf den digitalen Aufnahmen ebenso wie die Bestimmung der beiden Abriebsbewertungsfaktoren in effizienter Art und Weise mittels maschinellem Lernen aus den Aufnahmen erhalten, wobei insbesondere die Gewinnung der ersten und zweiten Abriebsbewertungsfaktoren in zweckmäßiger Weise auch kombiniert werden kann. Nach Einschätzung der Erfinder eignen sich dabei insbesondere solche Softwarelösungen besonders, welche auf künstlichen neuronalen Netzen basieren. Bevorzugt ist ein erfindungsgemäßes Verfahren, wobei das Identifikationsmodul und/oder das Untergrundbewertungsmodul und/oder Ablagerungsbewertungsmodul auf einem Algorithmus zum maschinellen Lernen basieren, der ausgewählt ist aus der Gruppe bestehend aus Algorithmen des überwachten Lernens, bevorzugt ausgewählt ist aus der Gruppe bestehend aus künstlichen neuronalen Netzen, und/oder wobei das Identifikationsmodul und/oder das Untergrundbewertungsmodul und/oder Ablagerungsbewertungsmodul erhalten werden durch Anwendung eines Algorithmus zum maschinellen Lernen auf den jeweiligen Satz von Trainingsdaten, wobei der Algorithmus ausgewählt ist aus der Gruppe bestehend aus Algorithmen des überwachten Lernens, bevorzugt ausgewählt ist aus der Gruppe bestehend aus künstlichen neuronalen Netzen.

Bevorzugt ist ein erfindungsgemäßes Verfahren, wobei die Ableitung des ersten Abriebsbewertungsfaktors und des zweiten Abriebsbewertungsfaktors eines Netzabschnitts unter Verwendung der gleichen digitalen Abbildungen des jeweiligen Netzabschnitts erfolgt.

Bei dem im erfindungsgemäßen Verfahren erstellten Produkt, d.h. der Reifenabriebskarte, handelt es sich um eine digitale Information, welche zweckmäßigerweise auf der elektronischen Speichereinheit gespeichert werden kann, die zu der elektronischen Datenverarbeitungsvorrichtung gehört, auf der beziehungsweise mit deren Hilfe das erfindungsgemäße Verfahren durchgeführt wird. Von dieser Speichereinheit kann die Reifenabriebskarte beispielsweise vervielfältigt und auf andere Speichereinheiten übertragen werden. Besonders bevorzugt ist es nach Einschätzung der Erfinder jedoch, wenn die elektronische Speichereinheit als Cloud ausgeführt ist, auf die die Anwender von datenbasierten Abschätzungsverfahren zur Abschätzung des Reifenabriebs zurückgreifen können, um die Reifenabriebskarte als Einflussfaktor zu berücksichtigen. Bevorzugt ist somit ein erfindungsgemäßes Verfahren, wobei die elektronische Speichereinheit eine Cloud ist.

Die Erfindung betrifft auch eine elektronische Speichereinheit umfassend eine darauf gespeicherte Reifenabriebskarte eines Verkehrsnetzes, umfassend für verschiedene Netzabschnitte des Verkehrsnetzes unterschiedliche Abriebsbewertungen, wobei die Reifenabriebskarte mit dem erfindungsgemäßen Verfahren erstellt wurde.

Die Erfindung betrifft zudem die Verwendung einer mit dem erfindungsgemäßen Verfahren erstellten und/oder auf einer erfindungsgemäßen elektronischen Speichereinheit gespeicherten Reifenabriebskarte in einem Verfahren zur Abschätzung des Abriebs von Fahrzeugreifen eines Fahrzeugs, umfassend die Schritte:
u) Fahren eines Fahrzeugs auf den Verkehrswegen des Verkehrsnetzes unter Erfassung der Fahrroute durch die Netzabschnitte der Reifenabriebskarte, und
v) Abschätzen des Abriebs der Fahrzeugreifen des Fahrzeugs in Abhängigkeit von den Abriebsbewertungen der durchfahrenen Netzabschnitte der Reifenabriebskarte.

Die für die vorstehende Verwendung benötigte Information über die durchfahrenen Netzabschnitte der Reifenabriebskarte lassen sich in vorteilhafter Weise über GPS-Daten des Fahrzeugs erhalten, welche in modernen Fahrzeugen ohnehin erfasst werden. Bevorzugt ist somit eine erfindungsgemäße Verwendung, wobei die Erfassung der Fahrroute durch die Netzabschnitte unter Erfassung von GPS-Daten und durch Abgleich der erfassten GPS-Daten mit der Reifenabriebskarte des Verkehrsnetzes erfolgt.

Als Verfahren zur Abschätzung des Abriebs von Fahrzeugreifen können prinzipiell sämtliche aus dem Stand der Technik bekannten Abschätzungsverfahren verwendet werden, wobei die genaue Durchführung und das Ausmaß, in dem die Reifenabriebskarte berücksichtigt wird, von Verfahren zu Verfahren variieren kann. Die Erfinder erachten es jedoch als besonders vorteilhaft, wenn das Abschätzen des Abriebs in den Abschätzungsverfahren zusätzlich weitere Fahrparameter berücksichtigt, welche einen Einfluss auf den Reifenabrieb haben. Bevorzugt ist folglich eine erfindungsgemäße Verwendung, wobei das Abschätzen des Abriebs der Fahrzeugreifen des Fahrzeugs in Abhängigkeit von einem oder mehreren Fahrparametern beim Durchfahren der verschiedenen Fahrabschnitte erfolgt, wobei der eine oder die mehreren Fahrparameter ausgewählt sind aus der Gruppe bestehend aus der mittleren Fahrgeschwindigkeit, der mittleren Achslast, der Umgebungstemperatur und der Umgebungsfeuchtigkeit, bevorzugt der mittleren Fahrgeschwindigkeit und der mittleren Achslast.

Bevorzugt ist zusätzlich oder alternativ auch eine erfindungsgemäße Verwendung, wobei das Fahrzeug Mittel zum Erfassen des einen oder der mehreren Fahrparameter umfasst.

Während das Phänomen des Reifenabriebs in den vorstehenden Ausführungen bislang vor allen Dingen aus Sicht des Fahrzeugreifens gedacht wurde, haben die Erfinder erkannt, dass die erfindungsgemäß hergestellte Reifenabriebskarte auch einer weiteren vorteilhaften Verwendung zugeführt werden kann. Aus Sicht des Verkehrsnetzes betrachtet stellt die Reifenabriebskarte nämlich die Information bereit, in welchen Bereichen mit einem besonders hohem Reifenabrieb und damit einer Gummiablagerung auf der Fahrbahn zu rechnen ist, welche früher oder später in das Abwassersystem des Verkehrsnetzes eindringen wird. Die Entfernung solcher Gummireste aus dem Abwasser erfordert häufig spezifische Abwasserfilteranlagen, welche infolge des zumeist hohen Anschaffungspreises von den verantwortlichen Stadtplanern zumeist nur zurückhaltend eingesetzt werden.

Die Erfindung betrifft somit auch die Verwendung einer mit dem erfindungsgemäßen Verfahren erstellten und/oder auf einer erfindungsgemäßen elektronischen Speichereinheit gespeicherten Reifenabriebskarte zur Planung eines Abwassersystems des Verkehrsnetzes, wobei die Position von Abwasserfilteranlagen im Abwassersystem des Verkehrsnetzes in Abhängigkeit von den Abriebsbewertungen der Netzabschnitte der Reifenabriebskarte positioniert werden.

Die erfindungsgemäße Verwendung der Reifenabriebskarte sieht vor, dass die Planung des Abwassersystems des Verkehrsnetzes insbesondere die Positionierung der Abwasserfilteranlagen auf die Abriebsbewertungen der jeweiligen Netzabschnitte abgestimmt werden kann, um entsprechende Abwasserfilteranlagen beispielsweise an Abriebsschwerpunkten zu positionieren oder die Beabstandungen entsprechender Abwasserfilteranlagen daran auszurichten, dass die zwischenliegende Strecke einen bestimmten Erwartungswert des Reifenabriebs nicht überschreitet. Hierbei ist es für die vorstehende Verwendung bevorzugt, wiederum das Verkehrsaufkommen auf den jeweiligen Straßen als Einflussfaktor zu berücksichtigen, insbesondere dann, wenn der zweite Abriebsbewertungsfaktor bei der Erstellung der Reifenabriebskarte im Lichte des Verkehrsaufkommens skaliert wurde, um zu verhindern, dass Orte hoher absoluter Gummiabscheidungen dadurch unterbewertet werden, dass die Straße ein hohes Verkehrsaufkommen aufweist.

Bevorzugt ist eine erfindungsgemäße Verwendung, wobei die Abwasserfilteranlagen Anlagen zur Abscheidung von Gummiresten aus einem wässrigen Medium sind.

Bevorzugt ist eine erfindungsgemäße Verwendung, wobei die Abwasserfilteranlagen in der Nähe von Netzabschnitten platziert werden, deren Abriebsbewertung einen vorgegebenen ersten Grenzwert überschreiten, und/oder wobei die Abwasserfilteranlagen derart voneinander beabstandet werden, dass die Summe der Abriebsbewertungen der dazwischenliegenden Netzabschnitte unterhalb eines vorgegebenen zweiten Grenzwertes liegen.

Die entsprechende Reifenabriebskarte kann darüber hinaus auch als hilfreicher Input verwendet werden, um Städte auch bei der Planung von Verkehrsflüssen unterstützen. Solche Verkehrsflüsse werden meistens im Rahmen von sogenannten ,constraint optimization problems' geplant, die insbesondere den Spritverbrauch und das Verkehrsaufkommen berücksichtigen. Hierbei kann die Reifenabriebskarte als weitere Zusatzbedingung des Optimierungsproblems hinzugezogen werden. Offenbart wird im Rahmen der vorliegenden Erfindung somit auch die Verwendung einer erfindungsgemäßen Reifenabriebskarte bei der städtischen Verkehrsplanung.

Nachfolgend werden die Erfindung und bevorzugte Ausführungsformen der Erfindung unter Bezugnahme auf die beiliegende Figur näher erläutert und beschrieben. Dabei zeigt:

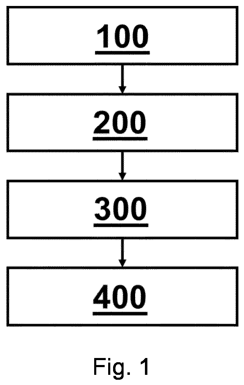

- Fig. 1: eine schematische Darstellung der Schritte des erfindungsgemäßen Verfahrens in einer bevorzugten Ausführungsform.

Fig. 1 visualisiert schematisch den Ablauf der Verfahrensschritte des erfindungsgemäßen Verfahrens in einer besonders bevorzugten Ausführungsform. Im ersten Verfahrensschritt 100 werden zunächst digitale Aufnahmen eines Verkehrsnetzes bereitgestellt.

Im vorliegend diskutierten Beispiel handelt es sich dabei beispielsweise um zwei unterschiedliche Sätze an Satellitenaufnahmen der Stadt Hannover, welche aus zwei unterschiedlichen Quellen für Satellitenaufnahmen bezogen wurden.

In den so bereitgestellten digitalen Aufnahmen werden im zweiten Verfahrensschritt 200 die Verkehrswege dadurch identifiziert, dass die jeweiligen Aufnahmen mit einer digitalen Repräsentation des Straßennetzes der Stadt Hannover überlagert werden. Anschließend werden in dem dritten Verfahrensschritt 300 alle Straßen, Wege und Parkplätze in eine Vielzahl von gleich großen Planquadraten zerteilt, wobei jedes Planquadrat einen Netzabschnitt darstellt.

Die Zuweisung der Abriebsbewertung zu den jeweiligen Netzabschnitten erfolgt im vierten Verfahrensschritt 400 durch eine kombinierte Bildauswertung, welche auf maschinellem Lernen basiert. Hierfür wird eine auf maschinellem Lernen, insbesondere einem künstlichen neuronalen Netzwerk, basierende Software, mittels überwachtem Lernen und unter Verwendung eines Trainingssatzes von händisch attributierten digitalen Aufnahmen, denen jeweils ein erster Abriebsbewertungsfaktor und ein zweiter Abriebsbewertungsfaktor sowie eine resultierende Gesamtabriebsbewertung zugewiesen wurden, trainiert.

Hierbei erfolgt die Bewertung des zweiten Abriebsbewertungsfaktors unter Berücksichtigung des für die Netzabschnitte erwarteten Verkehrsaufkommens, um das erkennbare Ausmaß der Gummiablagerung entsprechend zu skalieren. Die auf maschinellem Lernen basierende Bildauswertung weist ausgehend von dem jeweiligen Training somit jedem Netzabschnitt auf Grundlage der zwei verschiedenen digitalen Aufnahmen des gleichen Netzabschnittes eine Abriebsbewertung zu, welche infolge des Trainings der Software insbesondere die verfügbaren Bildinformationen zur Untergrundbeschaffenheit, beispielsweise des Materials des Untergrundes und des Fahrbahnzustandes, sowie das Ausmaß der erkennbaren relativen Gummiablagerung berücksichtigt.

Nach der Zuweisung einer Abriebsbewertung zu sämtlichen Netzabschnitten kann die so erhaltene Reifenabriebskarte in einer Cloud gespeichert werden, von der aus sie beispielsweise von Flottenbetreibern abrufbar ist, die sie in die eingesetzten datenbasierten Abschätzungsverfahren zur Abschätzung des Reifenabriebs einbeziehen können, um bessere Prognosen über den Zustand der Fahrzeugreifen der Flottenfahrzeuge zu erhalten.

### Bezugszeichenliste

- 100: Verfahrensschritt a)
- 200: Verfahrensschritt b)
- 300: Verfahrensschritt c)
- 400: Verfahrensschritt d)

## Patentansprüche

1. Verfahren zum Erstellen einer Reifenabriebskarte eines Verkehrsnetzes, umfassend die Verfahrensschritte:
a) Bereitstellen von digitalen Aufnahmen eines Verkehrsnetzes,
b) Identifizieren von Verkehrswegen des Verkehrsnetzes auf den digitalen Aufnahmen,
c) virtuelles Zerlegen der Verkehrswege des Verkehrsnetzes in eine Vielzahl von Netzabschnitten,
d) Zuweisen von Abriebsbewertungen zu den Netzabschnitten des Verkehrsnetzes zum Erhalt einer Reifenabriebskarte des Verkehrsnetzes, umfassend für verschiedene Netzabschnitte des Verkehrsnetzes unterschiedliche Abriebsbewertungen,
wobei die Zuweisung der Abriebsbewertung zu den Netzabschnitten in Abhängigkeit zumindest eines ersten Abriebsbewertungsfaktors und eines zweiten Abriebsbewertungsfaktors erfolgt,
wobei der erste Abriebsbewertungsfaktor die Beschaffenheit des auf den digitalen Aufnahmen erkennbare Fahrbahnuntergrunds des jeweiligen Netzabschnitts ist, und wobei der zweite Abriebsbewertungsfaktor das Ausmaß der auf den digitalen Aufnahmen erkennbaren Gummiablagerungen ist,
wobei die Verfahrensschritte a), b), c) und d) von oder unter Verwendung einer elektronischen Datenverarbeitungsvorrichtung durchgeführt werden, wobei die elektronische Datenverarbeitungsvorrichtung eine elektronische Speichereinheit umfasst,
wobei die Verkehrswege insbesondere ausgewählt sind aus der Gruppe bestehend aus Straßen, Wegen und Plätzen.

2. Verfahren nach Anspruch 1, wobei die digitalen Aufnahmen des Verkehrsnetzes Luftbildaufnahmen und/oder Satellitenaufnahmen sind.

3. Verfahren nach einem der Ansprüche 1 bis 2, wobei das Identifizieren von Verkehrswegen des Verkehrsnetzes auf den digitalen Aufnahmen durch einen ersten Bilderkennungs-Algorithmus erfolgt.

4. Verfahren nach einem der Ansprüche 1 bis 3, wobei das Identifizieren von Verkehrswegen des Verkehrsnetzes auf den digitalen Aufnahmen durch das Überlagern der digitalen Aufnahmen mit einer digitalen Karte des Verkehrsnetzes erfolgt.

5. Verfahren nach einem der Ansprüche 1 bis 4, wobei das virtuelle Zerlegen der Verkehrswege des Verkehrsnetzes in Netzabschnitte vorbestimmter Abmessungen erfolgt.

6. Verfahren nach einem der Ansprüche 1 bis 5, wobei jedem Netzabschnitt eine Abriebsbewertung in Abhängigkeit zumindest des ersten Abriebsbewertungsfaktors und des zweiten Abriebsbewertungsfaktors aus einer vorgegebenen Zahl von vordefinierten Abriebsbewertungen zugewiesen wird, wobei die vordefinierten Abriebsbewertungen Klassen einer Klassifikation darstellen, in die die Netzabschnitt in Abhängigkeit zumindest des ersten Abriebsbewertungsfaktors und des zweiten Abriebsbewertungsfaktors klassiert werden.

7. Verfahren nach einem der Ansprüche 1 bis 6, wobei die Beschaffenheit des auf den digitalen Aufnahmen erkennbaren Fahrbahnuntergrundes des jeweiligen Netzabschnitts bewertet wird ausgehend vom Fahrbahnmaterial und dem Fahrbahnzustand, um daraus den erste Abriebsbewertungsfaktor abzuleiten.

8. Verfahren nach einem der Ansprüche 1 bis 7, wobei die Bewertung der Beschaffenheit des auf den digitalen Aufnahmen erkennbaren Fahrbahnuntergrundes des jeweiligen Netzabschnitts durch einen zweiten Bilderkennungs-Algorithmus erfolgt, wobei insbesondere die Beschaffenheit des auf den digitalen Aufnahmen erkennbaren Fahrbahnuntergrundes des jeweiligen Netzabschnitts zur Ableitung des ersten Abriebsbewertungsfaktors mit einem auf maschinellem Lernen basierenden Untergrundbewertungsmodul bewertet wird, welches auf der elektronischen Speichereinheit gespeichert ist, wobei die elektronische Datenverarbeitungsvorrichtung dazu eingerichtet ist, die digitalen Aufnahmen des jeweiligen Netzabschnitts als Eingabe in das Untergrundbewertungsmodul zu geben und die Beschaffenheit des auf den digitalen Aufnahmen erkennbaren Fahrbahnuntergrundes zu bewerten, wobei das Untergrundbewertungsmodul dazu trainiert ist, in digitalen Aufnahmen eines Netzabschnitts die Beschaffenheit des auf den digitalen Aufnahmen erkennbaren Fahrbahnuntergrundes zu bewerten, wobei das Training mittels überwachtem Lernen mit einem Satz von Trainingsdaten erfolgt, welcher eine Vielzahl von Trainingsaufnahmen von Netzabschnitten umfasst, in denen dem erkennbaren Fahrbahnuntergrund eine Beschaffenheit zugeordnet ist.

9. Verfahren nach einem der Ansprüche 1 bis 8, wobei die Beschaffenheit des auf den digitalen Aufnahmen erkennbaren Fahrbahnuntergrundes des jeweiligen Netzabschnitts zur Ableitung des ersten Abriebsbewertungsfaktors unter Berücksichtigung von zwei oder mehr verschiedenen digitalen Aufnahmen des Netzabschnittes erfolgt.

10. Verfahren nach einem der Ansprüche 1 bis 9, wobei das Ausmaß der auf den digitalen Aufnahmen des jeweiligen Netzabschnitts erkennbaren Gummiablagerungen durch einen dritten Bilderkennungs-Algorithmus erfolgt, wobei insbesondere das Ausmaß der auf den digitalen Aufnahmen des jeweiligen Netzabschnitts erkennbaren Gummiablagerungen mit einem auf maschinellem Lernen basierenden Ablagerungsbewertungsmodul bewertet wird, welches auf der elektronischen Speichereinheit gespeichert ist, wobei die elektronische Datenverarbeitungsvorrichtung dazu eingerichtet ist, die digitalen Aufnahmen des jeweiligen Netzabschnitts als Eingabe in das Ablagerungsbewertungsmodul zu geben und das Ausmaß der auf den digitalen Aufnahmen des jeweiligen Netzabschnitts erkennbaren Gummiablagerungen zu bewerten, wobei das Ablagerungsbewertungsmodul dazu trainiert ist, in digitalen Aufnahmen eines Netzabschnitts das Ausmaß der auf den digitalen Aufnahmen des jeweiligen Netzabschnitts erkennbaren Gummiablagerungen zu bewerten, wobei das Training mittels überwachtem Lernen mit einem Satz von Trainingsdaten erfolgt, welcher eine Vielzahl von Trainingsaufnahmen von Netzabschnitten umfasst, in denen das Ausmaß der auf den digitalen Aufnahmen des jeweiligen Netzabschnitts erkennbaren Gummiablagerungen qualitativ oder quantitativ bekannt ist.

11. Verfahren nach einem der Ansprüche 1 bis 10, wobei das Ausmaß der auf den digitalen Aufnahmen des jeweiligen Netzabschnitts erkennbaren Gummiablagerungen des jeweiligen Netzabschnitts zur Ableitung des zweiten Abriebsbewertungsfaktors unter Berücksichtigung von zwei oder mehr, bevorzugt drei oder mehr, besonders bevorzugt einer Vielzahl von verschiedenen digitalen Aufnahmen des Netzabschnittes erfolgt.

12. Verfahren nach einem der Ansprüche 1 bis 11, wobei das Ausmaß der auf den digitalen Aufnahmen des jeweiligen Netzabschnitts erkennbaren Gummiablagerungen mit einem dem Netzabschnitt zugeordneten Verkehrsaufkommenswert korreliert wird, um den zweite Abriebsbewertungsfaktor abzuleiten, wobei der zweite Abriebsbewertungsfaktor für ein bestimmtes Ausmaß an erkennbarer Gummiablagerung umso kleiner ist, umso größer der Verkehrsaufkommenswert des Netzabschnitts ist.

13. Elektronische Speichereinheit umfassend eine darauf gespeicherte Reifenabriebskarte eines Verkehrsnetzes, umfassend für verschiedene Netzabschnitte des Verkehrsnetzes unterschiedliche Abriebsbewertungen, wobei die Reifenabriebskarte mit dem Verfahren nach einem der Ansprüche 1 bis 12 erstellt wurde.

14. Verwendung einer mit dem Verfahren nach einem der Ansprüche 1 bis 12 erstellten und/oder auf einer elektronischen Speichereinheit nach Anspruch 13 gespeicherten Reifenabriebskarte in einem Verfahren zur Abschätzung des Abriebs von Fahrzeugreifen eines Fahrzeugs, umfassend die Schritte:
u) Fahren eines Fahrzeugs auf den Verkehrswegen des Verkehrsnetzes unter Erfassung der Fahrroute durch die Netzabschnitte der Reifenabriebskarte, und
v) Abschätzen des Abriebs der Fahrzeugreifen des Fahrzeugs in Abhängigkeit von den Abriebsbewertungen der Durchfahrenen Netzabschnitte der Reifenabriebskarte.

15. Verwendung einer mit dem Verfahren nach einem der Ansprüche 1 bis 12 erstellten und/oder auf einer elektronischen Speichereinheit nach Anspruch 13 gespeicherten Reifenabriebskarte zur Planung eines Abwassersystems des Verkehrsnetzes, wobei die Position von Abwasserfilteranlagen im Abwassersystem des Verkehrsnetzes in Abhängigkeit von den Abriebsbewertungen der Netzabschnitte der Reifenabriebskarte positioniert werden.

## Claims

1. Method for creating a tyre abrasion map of a traffic network, comprising the method steps of:
a) providing digital recordings of a traffic network,
b) identifying traffic routes of the traffic network on the digital recordings,
c) virtually breaking down the traffic routes of the traffic network into a multiplicity of network sections,
d) assigning abrasion assessments to the network sections of the traffic network to obtain a tyre abrasion map of the traffic network, comprising different abrasion assessments for different network sections of the traffic network,
wherein the assignment of the abrasion assessment to the network sections is performed in dependence on at least a first abrasion assessment factor and a second abrasion assessment factor,
wherein the first abrasion assessment factor is the condition of the road surface of the respective network section identifiable on the digital recordings, and
wherein the second abrasion assessment factor is the extent of the rubber deposits detectable on the digital recordings,
wherein method steps a), b), c) and d) are carried out by or using an electronic data processing device, wherein the electronic data processing device comprises an electronic storage unit,
wherein the traffic routes are in particular selected from the group consisting of roads, lanes and squares.

2. Method according to Claim 1, wherein the digital recordings of the traffic network are aerial photos and/or satellite recordings.

3. Method according to either of Claims 1 and 2, wherein the identification of traffic routes of the traffic network on the digital recordings is performed by a first image recognition algorithm.

4. Method according to one of Claims 1 to 3, wherein the identification of traffic routes of the traffic network on the digital recordings is performed by superimposing a digital map of the traffic network on the digital recordings.

5. Method according to one of Claims 1 to 4, wherein the virtual breakdown of the traffic routes of the traffic network is performed into network sections of predetermined dimensions.

6. Method according to one of Claims 1 to 5, wherein each network section is assigned an abrasion assessment in dependence on at least the first abrasion assessment factor and the second abrasion assessment factor from a prescribed number of predefined abrasion assessments, wherein the predefined abrasion assessments represent classes of a classification into which the network sections are classified in dependence on at least the first abrasion assessment factor and the second abrasion assessment factor.

7. Method according to one of Claims 1 to 6, wherein the condition of the road surface of the respective network section identifiable on the digital recordings is assessed on the basis of the material of the road and the state of the road in order to derive from this the first abrasion assessment factor.

8. Method according to one of Claims 1 to 7, wherein the assessment of the condition of the road surface of the respective network section identifiable on the digital recordings is performed by a second image recognition algorithm, wherein in particular the condition of the road surface of the respective network section identifiable on the digital recordings is assessed for deriving the first abrasion assessment factor by a road assessment module based on machine learning, which is stored on the electronic storage unit, wherein the electronic data processing device is designed to enter the digital recordings of the respective network section as input into the road assessment module and to assess the condition of the road surface identifiable on the digital recordings, wherein the road assessment module is trained to assess in digital recordings of a network section the condition of the road surface identifiable on the digital recordings, wherein the training is performed by means of supervised learning with a set of training data which comprises a multiplicity of training recordings of network sections in which a condition is assigned to the identifiable road surface.

9. Method according to one of Claims 1 to 8, wherein the condition of the road surface of the respective network section identifiable on the digital recordings is performed for deriving the first abrasion assessment factor while taking into account two or more different digital recordings of the network section.

10. Method according to one of Claims 1 to 9, wherein the extent of the rubber deposits identifiable on the digital recordings of the respective network section is performed by a third image recognition algorithm, wherein in particular the extent of the rubber deposits identifiable on the digital recordings of the respective network section is assessed by a deposition assessment module based on machine learning, which is stored on the electronic storage unit, wherein the electronic data processing device is designed to enter the digital recordings of the respective network section as an input into the deposition assessment module and to assess the extent of the rubber deposits identifiable on the digital recordings of the respective network section, wherein the deposition assessment module is trained to assess in digital recordings of a network section the extent of the rubber deposits identifiable on the digital recordings of the respective network section, wherein the training is carried out by means of supervised learning with a set of training data which comprises a multiplicity of training recordings of network sections in which the extent of the rubber deposits identifiable on the digital recordings of the respective network section is known qualitatively or quantitatively.

11. Method according to one of Claims 1 to 10, wherein the extent of the rubber deposits of the respective network section identifiable on the digital recordings of the respective network section is performed for deriving the second abrasion assessment factor while taking into account two or more, preferably three of more, particularly preferably a multiplicity of, different digital recordings of the network section.

12. Method according to one of Claims 1 to 11, wherein the extent of the rubber deposits identifiable on the digital recordings of the respective network section is correlated with a traffic volume value assigned to the network section in order to derive the second abrasion assessment factor, wherein the second abrasion assessment factor for a specific extent of identifiable rubber deposits is all the smaller, the greater the traffic volume value of the network section.

13. Electronic storage unit comprising a tyre abrasion map of a traffic network stored on it, comprising different abrasion assessments for different network sections of the traffic network, wherein the tyre abrasion map has been created by the method according to one of Claims 1 to 12.

14. Use of a tyre abrasion map created by the method according to one of Claims 1 to 12 and/or stored on an electronic storage unit according to Claim 13 in a method for estimating the abrasion of vehicle tyres of a vehicle, comprising the steps of:
u) driving a vehicle on the traffic routes of the traffic network while capturing the driving route through the network sections of the tyre abrasion map, and
v) estimating the abrasion of the vehicle tyres of the vehicle in dependence on the abrasion assessments of the traversed network sections of the tyre abrasion map.

15. Use of a tyre abrasion map created by the method according to one of Claims 1 to 12 and/or stored on an electronic storage unit according to Claim 13 for planning a wastewater system of the traffic network, wherein wastewater filter installations are positioned in the wastewater system of the traffic network in dependence on the abrasion assessments of the network sections of the tyre abrasion map.

## Revendications

1. Procédé de création d'une carte d'usure de pneus d'un réseau de transport, comprenant les étapes de procédé :
a) fourniture d'enregistrements numériques d'un réseau de transport,
b) identification de voies de transport du réseau de transport sur les enregistrements numériques,
c) décomposition virtuelle des voies de transport du réseau de transport en une pluralité de tronçons de réseau,
d) attribution d'évaluations d'usure aux tronçons de réseau du réseau de transport pour obtenir une carte d'usure de pneus du réseau de transport, comprenant des évaluations d'usure différentes pour différents tronçons de réseau du réseau de transport,
l'attribution de l'évaluation d'usure aux tronçons de réseau étant effectuée en fonction d'au moins un premier facteur d'évaluation d'usure et d'un deuxième facteur d'évaluation d'usure,
le premier facteur d'évaluation d'usure étant la nature de la surface de chaussée du tronçon de réseau respectif visible sur les enregistrements numériques, et
le deuxième facteur d'évaluation d'usure étant l'ampleur des dépôts de caoutchouc visibles sur les enregistrements numériques,
les étapes de procédé a) b), c) et d) étant réalisées par ou en utilisant un dispositif électronique de traitement de données, le dispositif électronique de traitement de données comprenant une unité électronique de stockage,
les voies de transport étant choisies en particulier dans le groupe constitué de routes, de voies et de places.

2. Procédé selon la revendication 1, les enregistrements numériques du réseau de transport étant des images aériennes et/ou des images satellites.

3. Procédé selon l'une des revendications 1 à 2, l'identification de voies de transport du réseau de transport sur les enregistrements numériques étant effectuée par un premier algorithme de reconnaissance d'image.

4. Procédé selon l'une des revendications 1 à 3, l'identification de voies de transport du réseau de transport sur les enregistrements numériques étant effectuée en superposant les enregistrements numériques à une carte numérique du réseau de transport.

5. Procédé selon l'une des revendications 1 à 4, la décomposition virtuelle des voies de transport du réseau de transport en tronçons de réseau de dimensions prédéterminées étant effectuée.

6. Procédé selon l'une des revendications 1 à 5, une évaluation d'usure étant attribuée à chaque tronçon de réseau en fonction au moins du premier facteur d'évaluation d'usure et du deuxième facteur d'évaluation d'usure à partir d'un nombre prédéfini d'évaluations d'usure prédéfinies, les évaluations d'usure prédéfinies représentant des classes d'une classification, dans laquelle le tronçon de réseau est classé en fonction au moins du premier facteur d'évaluation d'usure et du deuxième facteur d'évaluation d'usure.

7. Procédé selon l'une des revendications 1 à 6, la nature de l'arase de chaussée identifiable sur les enregistrements numériques du tronçon de réseau respectif étant évaluée en partant du matériau de chaussée et de l'état de chaussée pour en déduite le premier facteur d'évaluation d'usure.

8. Procédé selon l'une des revendications 1 à 7, l'évaluation de la nature de l'arase identifiable sur les enregistrements numériques du tronçon de réseau respectif étant effectuée par un deuxième algorithme de reconnaissance d'image, la nature de l'arase identifiable sur les enregistrements numériques du tronçon de réseau respectif étant en particulier évaluée pour déduire le premier facteur d'évaluation d'usure avec un module d'évaluation d'arase basé sur l'apprentissage automatique, qui est stocké dans l'unité de stockage électronique, le dispositif électronique de traitement de données étant mis au point pour fournir les enregistrements numériques du tronçon de réseau respectif en tant qu'entrée dans le module d'évaluation d'arase et pour évaluer la nature de l'arase de chaussée identifiable sur les enregistrements numériques, le module d'évaluation d'arase étant entraîné pour évaluer dans des enregistrements numériques d'un tronçon de réseau la nature de l'arase de chaussée identifiable sur les enregistrements numériques, l'entraînement étant effectué au moyen d'un apprentissage supervisé avec un jeu de données d'entraînement, qui comprend une pluralité d'enregistrements d'entraînement de tronçons de réseau dans lesquels une nature est associée à l'arase de chaussée identifiable.

9. Procédé selon l'une des revendications 1 à 8, la nature de l'arase de chaussée identifiable sur les enregistrements numériques du tronçon de réseau respectif étant évaluée pour déduire le premier facteur d'évaluation d'usure en tenant compte de deux enregistrements numériques différents ou plus du tronçon de réseau.

10. Procédé selon l'une des revendications 1 à 9, l'ampleur des dépôts de caoutchouc identifiables sur les enregistrements numériques du tronçon de réseau respectif étant évaluée par un troisième algorithme de reconnaissance d'image, en particulier l'ampleur des dépôts de caoutchouc identifiables sur les enregistrements numériques du tronçon de réseau respectif étant évaluée avec un module d'évaluation de dépôt basé sur l'apprentissage automatique, lequel est stocké sur l'unité de stockage électronique, le dispositif électronique de traitement de données étant mis au point pour fournir les enregistrements numériques du tronçon de réseau respectif en tant qu'entrée dans le module d'évaluation de dépôt et pour évaluer l'ampleur des dépôts de caoutchouc identifiables sur les enregistrements numériques du tronçon de réseau respectif, le module d'évaluation de dépôt étant entraîné pour évaluer, dans les enregistrements numériques d'un tronçon de réseau, l'ampleur des dépôts de caoutchouc identifiables sur les enregistrements numériques du tronçon de réseau respectif, l'apprentissage étant effectué au moyen d'un apprentissage supervisé avec un jeu de données d'entraînement, lequel comprend une pluralité d'enregistrements d'apprentissage de tronçons de réseau, dans lesquels l'ampleur des dépôts de caoutchouc identifiables sur les enregistrements numériques du tronçon de réseau respectif est connue qualitativement ou quantitativement.

11. Procédé selon l'une des revendications 1 à 10, l'ampleur des dépôts de caoutchouc du tronçon de réseau respectif identifiables sur les enregistrements numériques du tronçon de réseau respectif étant évaluée pour déduire le deuxième facteur d'évaluation d'usure en tenant compte de deux ou plus, de manière préférée de trois ou plus, de manière particulièrement préférée d'une pluralité de différents enregistrements numériques du tronçon de réseau.

12. Procédé selon l'une des revendications 1 à 11, l'ampleur des dépôts de caoutchouc identifiables sur les enregistrements numériques du tronçon de réseau respectif étant corrélée avec une valeur de volume de trafic associée au tronçon de réseau pour déduire le deuxième facteur d'évaluation d'usure, le deuxième facteur d'évaluation d'usure pour une certaine ampleur de dépôts de caoutchouc identifiables étant d'autant plus petit que la valeur de volume de trafic du tronçon de réseau est importante.

13. Unité de stockage électronique comprenant une carte d'usure de pneus d'un réseau de transport stockée sur celle-ci, comprenant différentes évaluations d'usure pour différents tronçons de réseau du réseau de transport, la carte d'usure de pneus ayant été créée avec le procédé selon l'une des revendications 1 à 12.

14. Utilisation d'une carte d'usure de pneus créée avec le procédé selon l'une des revendications 1 à 12 et/ou stockée sur une unité de stockage électronique selon la revendication 13 dans un procédé d'appréciation de l'usure de pneus de véhicule d'un véhicule, comprenant les étapes :
u) conduite d'un véhicule sur les voies de transport du réseau de transport en détectant l'itinéraire à travers les tronçons de réseau de la carte d'usure de pneus, et
v) appréciation de l'usure des pneus de véhicule du véhicule en fonction des évaluations d'usure des tronçons de réseau traversés de la carte d'usure de pneus.

15. Utilisation d'une carte d'usure de pneus créée avec le procédé selon l'une des revendications 1 à 12 et/ou stockée sur une unité de stockage électronique selon la revendication 13 pour planifier un système d'eaux usées du réseau de transport, des installations de filtrage d'eaux usées étant positionnées dans le système d'eaux usées du réseau de transport en fonction des évaluations d'usure des tronçons de réseau de la carte d'usure de pneus.
